# FASCICULE DE BREVET EUROPEEN

(11) **EP 2 080 034 B1**
(45) Date de publication et mention de la délivrance du brevet: **11.09.2013**
(21) Numéro de dépôt: 07823306.1
(22) Date de dépôt: 19.07.2007
(51) Int. Cl.: G01S 5/02, G01S 5/12, G01S 5/14

(54) **DISPOSITIF DE LOCALISATION ET/OU D'IDENTIFICATION DE BIENS ET/OU DE PERSONNES DANS UN LOCAL QUELCONQUE**
EINRICHTUNG ZUM LOKALISIEREN UND/ODER IDENTIFIZIEREN VON GÜTERN UND/ODER PERSONEN IN EINEM BELIEBIGEN RAUM
DEVICE FOR LOCALIZING AND/ OR IDENTIFYING GOODS AND/ OR PERSONS IN ANY ROOM

(30) Priorité: 19.07.2006 FR 0606536
(43) Date de publication de la demande: 22.07.2009
(73) Titulaire: D 5 X, 92160 Antony (FR)
(72) Inventeur: PETIT, Gérard, 78660 Ablis (FR); DUC, Jerôme, 92270 Bois Colombes (FR)
(74) Mandataire: Chaffraix, Jean
(86) Numéro de dépôt international: PCT/FR2007/001244
(87) Numéro de publication internationale: WO 2008/009824

(56) Documents cités:
- EP-A- 1 617 601
- WO-A-2004/048994
- WO-A-2004/104621
- WO-A-2005/031383
- DE-A1- 10 142 951
- US-A- 6 011 487
- US-A1- 2004 140 931
- US-B2- 6 473 038
- BAHL P ET AL: "RADAR: an in-building RF-based user location and tracking system" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, 26 mars 2000 (2000-03-26), pages 775-784, XP010376167 ISBN: 0-7803-5880-5

## Description

La présente invention concerne un dispositif d'identification et de localisation de personnes et/ou d'objets dans des locaux quelconques tels que des bureaux, des usines.

A l'heure actuelle, on connaît principalement des systèmes d'accès qui ont pour but de surveiller et/ou d'autoriser les accès de personnes et de certains objets à certains espaces de bureaux ou locaux industriels, par conséquent en les identifiant. On équipe en général les personnes ou les objets d'un élément identifiant et on installe des lecteurs de cet élément identifiant aux différents points d'accès des zones contrôlées. Cette identification peut s'effectuer par un identifiant de proximité, les éléments identifiants pouvant être lus lorsqu'ils se trouvent à une très faible distance du lecteur. Ils nécessitent généralement une action volontaire du porteur qui présente son élément identifiant pour obtenir l'accès. On peut également opérer cette identification par lecture à la volée de l'identifiant lors de son passage dans l'accès à la zone contrôlée.

On a pu voir depuis plusieurs années un essor important des dispositifs d'identification et/ou localisation par radiofréquence. Ces dispositifs peuvent être classés en deux catégories de systèmes soit passifs soit actifs.

Dans le cas des systèmes passifs, on lit des codes identifiants contenus dans des organes électroniques appelés étiquettes, ne nécessitant aucune réserve d'énergie. Seul l'organe interrogateur/lecteur émet une énergie de fonctionnement. Ces étiquettes sont généralement utilisées pour suivre des produits au cours de leur expédition mais peuvent également comprendre les systèmes de contrôle d'accès avec badges.

Dans le cas des systèmes actifs, ils permettent la lecture du code identifiant avec une commande associée ou non, par communication radio fréquence soit spontanément soit sur évènement (par exemple touche utilisateur) soit après interrogation. Les dispositifs de type « contrôle d'accès » avec badges « mains libres » sont à classer dans cette catégorie. De même, les commandes d'ouverture de porte de voiture ou de garage, certaines clés électroniques peuvent également être assimilées à ce type de dispositif.

En ce qui concerne les dispositifs de localisation par radiofréquence, on connaît principalement deux types de techniques de localisation.

Le premier type, analogique est basé sur la mesure du niveau de réception (atténuation du rayonnement en fonction de la distance) et/ou de la mesure de la direction de la source de plusieurs émetteurs (triangulation). Avec ces techniques en champ libre, l'erreur de mesure est essentiellement liée au rapport signal sur bruit et à la proximité des émetteurs récepteurs (l'erreur de mesure d'un angle est d'autant moins significative que la distance entre les points est grande).

Ainsi, on a proposé notamment de croiser des niveaux de réception de routeurs « sans fil » répartis dans les surfaces, permettant de localiser les éléments informatiques connectés au réseau sans fil. Ces techniques ne permettent que de localiser des organes sans fil (ordinateur, agenda électronique, consoles de jeux, etc.). La précision de la localisation est mauvaise car elle est dépendante des nombreux obstacles que sont les cloisons, le mobilier et des performances des émetteurs/récepteurs qui ne sont pas directement conçus pour ce type d'application ainsi que du rapport signal sur bruit existant dans la zone surveillée.

De même, on peut effectuer la lecture d'identifiants se trouvant dans une zone couverte par un récepteur radiofréquence. La zone d'identification est alors obtenue en utilisant des antennes de réception directives conçues de manière à obtenir la réception d'un identifiant uniquement lorsque celui-ci se trouve dans le lobe de réception hertzien obtenu.

Dans WO04/104621, on propose un procédé pour déterminer la position d'une pluralité d'émetteurs radio par rapport à un émetteur maître, un signal de contrôle étant fourni par l'unité maître pour commander chaque émetteur radio de sorte à transmettre un signal de test dont la mesure du temps d'arrivée permet d'estimer la position de chacun.

On connaît également par US-A-6 011 487 un système avec lequel on transmet un premier signal vers un dispositif de communication sans fil à localiser, celui-ci émet alors un second signal vers un récepteur, des moyens de détermination des intensités de signaux des seconds signaux reçus, des moyens de mémorisation des emplacements de chaque récepteur. Ces récepteurs sont déployés sur la surface de manière à être séparés les uns des autres et généralement autour d'un émetteur. Un ordinateur couplé au circuit de commande permet de commander le circuit de commande pour transmettre le premier signal et de déterminer l'emplacement du dispositif de communication sans fil à partir des intensités de signaux et des emplacements des récepteurs. Toutefois pour que le système soit mis en oeuvre correctement, l'environnement est présumé tel qu'il soit transparent aux rayonnements et donc ne présente pas de problème d'atténuation et de réflexion.

Le second type concerne les techniques numériques. Avec l'apparition des premiers systèmes assurant un débit de transmission d'information binaire supérieur à plusieurs mégabits par seconde, il est devenu possible de mesurer le temps de trajet d'une information numérique dans l'espace. Ainsi, un récepteur peut se localiser géographiquement s'il connaît la position de plusieurs sources d'émission synchrone (GPS par exemple). De la même manière, une fois synchronisés entre eux dans le temps, plusieurs récepteurs peuvent alors aisément localiser une source d'émission par un procédé de triangulation. Ces techniques permettent d'obtenir une précision en champ libre directement liée à la vitesse de transmission numérique (100 mégabits par secondes donnant environ 3 mètres pour un bit). Il convient également d'ajouter l'imprécision sur la vitesse de propagation des ondes (vitesse de la lumière dans son milieu).

Dans ce cas, plusieurs antennes réceptrices peuvent être déployées dans les zones surveillées. Un calcul de triangulation sur l'émission de l'identifiant permet la localisation. De telles techniques peuvent être déployées dans les immeubles de bureau. Cependant, dans l'état actuel des performances de ces systèmes, une erreur de localisation trop importante est constatée (3 à 10 mètres selon les cas de figure). En outre, ces techniques numériques ont le désavantage d'utiliser obligatoirement des bandes radiofréquences offrant un débit d'information supérieur à 100 Mb/s ce qui entre directement en conflit avec les besoins en communication interne des immeubles tertiaires (sans fil).

Toutefois, les dispositifs d'identification et/ou de localisation par radiofréquence se trouvent systématiquement confrontés aux difficultés suivantes lors de leur utilisation dans des bâtiments tertiaires ou industriels :
- phénomènes d'atténuation et de réflexion des ondes hertziennes, très accentués et surtout aléatoires et instables à cause des obstacles (mobilier, cloison)
- grand nombre de dispositifs par radiofréquences déployés (téléphonie, informatique, robotique)
- mobilité de plus en plus importante des biens et des personnes.

Ainsi dans le document « Radar : an in-building RF-based user location and tracking system » Infocom 2000, Ninteenth Annual Joint Conference of the IEEE Computer and Communications Societies, Proceedings IEEE, Tel Aviv, Israel 26-30 March 2000, PISCATAWAY, NJ, USA, IEEE, US, 26 mars 2000, pages 775-784, on décrit un système reprenant ce principe de calcul de triangulation permettant la localisation. Ainsi, on propose d'utiliser des informations sur la force de signaux collectées à des emplacements de réception multiples pour « trianguler » les coordonnées de l'utilisateur. La triangulation est réalisée en utilisant à la fois l'information sur la force du signal déterminée empiriquement et l'information sur la force du signal calculée théoriquement. On arrive ainsi à déterminer la localisation d'un utilisateur à quelques mètres de son emplacement réel. Cette détermination s'effectue donc par la combinaison des mesures empiriques effectuées à l'aide de plusieurs stations de base pour couvrir une zone et la modélisation de la propagation du signal. Ainsi, dans l'exemple donné on met en place trois stations de base pour recueillir les informations concernant un signal émis par le « poste » utilisateur. On initie alors une phase d'apprentissage au cours de laquelle on recueille les informations du signal émis par l'utilisateur de manière horodatée et en outre localisée, ledit utilisateur indiquant sa position sur une carte de la surface du lieu (étage d'un immeuble) où la localisation doit intervenir ainsi que son orientation. Ainsi, lors de cette phase d'apprentissage on collecte l'information sur la force du signal dans les quatre directions (nord, sud, est, ouest) à 70 emplacements physiques à l'étage. De ce fait, pour chaque combinaison d'emplacement et d'orientation, on a collecté au moins 20 échantillons de forces de signaux. A partir de ces données collectées, de la topologie de l'étage, des coordonnées des pièces, des coordonnées des trois stations, on calcule le nombre de cloisons qui obstruent la ligne directe entre les stations de base et les emplacements où les données empiriques ont été collectées. On peut alors calculer un modèle de propagation de signal. Ainsi lors de la phase de localisation, en fonction des données collectées, on peut déterminer la localisation avec une bonne précision. La localisation étant obtenue par triangulation, seules trois stations de base sont nécessaires. Toutefois, ce système reste lourd à mettre en oeuvre et demande une phase d'apprentissage (collecte des données localisées) qui doit être mise en oeuvre pour chaque type de surface et refait à chaque changement d'emplacement d'une station de base.

Dans ce document, on propose alors de réaliser en alternative à la collecte de données empiriques, un modèle mathématique de propagation radio à l'intérieur d'un bâtiment, de manière à générer un ensemble de données calculées de manière théoriques apparentées aux données collectées de manière empirique. Ainsi, on calcule la force de signal selon une grille de localisation sur l'espace et ensuite on utilise ces données pour localiser un utilisateur.

Par conséquent, dans ce document, le dispositif proposé permet une localisation relativement précise mais qui nécessite toujours une phase d'apprentissage soit empirique soit par calcul, alourdissant la mise en oeuvre d'un tel dispositif.

On a également proposé dans WO04/048994 un procédé de localisation utilisable dans des bâtiments ayant des cloisons et des corridors s'étendant longitudinalement et latéralement. Des stations de base présentent une antenne orientée avec un diagramme en cosécante carrée longitudinalement et latéralement et scrutent une station mobile pour déterminer sa position.

Dans US-B-6 473 038, on a proposé un système permettant de localiser un nombre de dispositifs en mesurant les signaux transmis entre des dispositifs à emplacements connus et des dispositifs à emplacements inconnus et les signaux transmis entre des paires de dispositifs à emplacements inconnus, à entrer les mesures des signaux dans une fonction graphique qui comprend un nombre de premières sous-expressions, parmi lesquelles des sous-expressions de prédiction de mesure de signaux et ont des extrêmes lorsque la mesure du signal prédit est égal à une mesure de signal réelle et à optimiser la fonction graphique.

On a proposé également dans WO05/031383 un réseau de localisation d'étiquette sans fil, constitué d'une pluralité de noeuds sans fil indépendants, chaque noeud étant inclus dans une couche ou unité de couche pour une installation à l'intérieur d'un bâtiment et étant configuré pour être connectable sans fil avec au moins un autre noeud de telle sorte que lorsque ladite pluralité de noeuds est installée, celle-ci présente un agencement espacé déterminable et permet une couverture sans fil pour localiser l'étiquette par référence audit agencement espacé. Ainsi, une étiquette à localiser émet régulièrement un signal et les noeuds à proximité lui répondent lui indiquant respectivement leur position, l'étiquette traite alors les données utiles à définir son positionnement qu'elle peut ensuite transmettre par un réseau local vers un ordinateur par exemple. On peut également demander au réseau de noeuds de chercher une étiquette et dans ce cas, les noeuds du réseau peuvent émettre une question et attendre une réponse pour la localisation. On se trouve donc dans un dispositif basé sur une technologie de réseau sans fil dont les noeuds constitutifs communiquent entre eux sur ce réseau.

Toutefois, aucun de ces dispositifs ne permet d'atteindre une finesse de localisation suffisante pour permettre notamment la collecte de données d'identification e/ou de localisation en vue de réaliser une collecte de données régulière, par exemple journalière, en vue d'une analyse de la gestion de l'occupation des surfaces.

Aussi, la présente invention a pour but de proposer un dispositif d'identification et/ou de localisation de biens et/ou de personnes au sein de locaux tertiaires, industriels logistique, hôtelier, éducation et plus généralement tous locaux, quelque en soit la nature ou l'utilisation, qui s'affranchit de l'ensemble des problèmes évoqués précédemment de manière simple à mettre en oeuvre et d'une très grande modularité et qui permet en outre une collecte des données.

A cet effet, l'invention a pour objet un dispositif de localisation et d'identification de biens et/ou de personnes tel que défini dans la revendication 1 et ses revendications dépendantes.

De préférence, les émetteurs récepteurs sont du type antenne directionnelle offrant une zone de réception semi-sphérique, qui dans certains cas sera dirigée vers le bas et fixée au plafond, encore appelée « globe ».

Ainsi, le déploiement des émetteurs récepteurs par radiofréquence (RF) selon un schéma d'implantation en fonction d'une division des surfaces à contrôler selon une unité de surface de base, c'est-à-dire en corrélation avec celle-ci, en fonction de la typologie d'utilisation de la surface permet d'obtenir la localisation d'un bien et/ou d'une personne malgré les phénomènes d'atténuation et de réflexion des ondes hertziennes, accentués et aléatoires du fait de la présence de cloisons et de mobilier.

En effet, dans les immeubles de bureaux, il est important de proposer au moins un émetteur-récepteur par espace cloisonné tel qu'un bureau, une salle de réunion. Ainsi, l'unité de surface de référence pour l'implantation peut être définie comme étant un espace cloisonné quelque soit la taille de cet espace, l'implantation des émetteurs/récepteurs devant alors être d'au moins un émetteur-récepteur pour ladite unité de surface ainsi définie.

La notion de trame et donc d'unité de surface correspondante est définie en fonction :
- de la modularité d'implantation des fenêtres et baies vitrées
- de la taille minimum d'un volume cloisonné (bureau, salle, pièce...)
- de la modularité d'implantation des installations d'éclairage et de chauffage-climatisation
de façon à permettre la présence d'au moins un émetteur-récepteur dans chaque volume cloisonné quelque soit le cloisonnement réalisé.

Selon une forme de réalisation préférée du dispositif, l'unité de surface de base utilisée dans les bureaux est celle du type trame de bureau, couramment définie dans des systèmes de gestion de confort connus. Ainsi une trame de bureau correspond généralement à une largeur de 1m35 (à peu près une fenêtre). Le plus petit bureau cloisonné présente généralement une taille égale à au moins deux trames de bureau. De préférence, dans les surfaces à surveiller constituées de bureaux, on implante un émetteur/récepteur RF, une trame sur deux selon l'invention. On obtient ainsi un déploiement régulier des émetteurs-récepteurs selon une unité de surface fixe. Cette régularité dans le déploiement des émetteurs-récepteurs permet de faire face à tous les cas de cloisonnement pouvant survenir lors de réaménagement par exemple.

En outre, plus la densité d'émetteurs-récepteurs est élevée, plus on a de chance d'en avoir au moins un par bureau, ou espace cloisonné même en cas de réaménagement.

Il est entendu que si la surface à surveiller est du type parc de stationnement de véhicules, on pourra définir une unité de surface de base spécifique à cette typologie d'utilisation de la surface et l'implantation des émetteurs récepteurs RF du dispositif selon l'invention sera choisie elle aussi en fonction de, en corrélation avec, cette unité de surface de base spécifique.

Ainsi, de manière très avantageuse, les éléments de référence lorsqu'ils sont constitués par les émetteurs récepteurs eux-mêmes permettent une localisation de l'élément identifiant par rapport au référentiel défini. L'implantation des émetteurs-récepteurs est parfaitement connue.

Lorsque les éléments de référence sont constitués par une pluralité d'éléments identifiants, identifiés, implantés ou non en fonction du référentiel défini, selon une première variante, un élément identifiant, identifié est généralement fixe et émet lui aussi. Son implantation dans le référentiel étant connue, il permet de localiser les émetteurs récepteurs (antenne) qui le reçoivent. Ainsi par référence à cet élément de référence, on peut localiser les émetteurs récepteurs et donc un élément identifiant émettant dans la même zone qu'un ou plusieurs éléments identifiants identifiés.

Dans cette forme de réalisation, il est donc possible de localiser un élément identifiant de manière absolue, c'est-à-dire sa localisation physique dans le bâtiment.

Selon une seconde variante, l'élément identifiant est localisé par rapport à un élément identifiant identifié, la localisation étant relative, car uniquement par rapport à l'élément identifiant identifié. Ainsi, il peut être avantageux de pouvoir localiser, par exemple, un ordinateur portable muni d'un élément identifiant par rapport à un élément identifiant de référence « identifié » au temps t de la mesure, cet élément identifiant de référence étant l'élément identifiant de l'utilisateur de l'ordinateur par exemple.

Ainsi, au moment de la localisation de l'ordinateur, on ne localise pas celui-ci comme étant à un endroit donné du bâtiment mais comme étant distant ou proche de l'élément de référence constitué de l'élément identifiant identifié de son utilisateur.

L'implantation des éléments de référence est choisie de sorte que l'émission d'un signal par un élément identifiant porté par un bien et/ou une personne est reçue de manière simultanée par N émetteurs-récepteurs, les moyens de traitement du dispositif selon l'invention étant propres à permettre la localisation dudit élément identifiant au moins par la mesure et l'analyse des niveaux de réception des N émetteurs récepteurs recevant de manière simultanée la même émission RF du même élément identifiant selon leur implantation ou l'implantation d'éléments identifiants fixes.

Ainsi de manière avantageuse, les moyens de traitement comprennent au moins des moyens de calcul qui analysent les mesures de niveaux de réception des N émetteurs récepteurs et déterminent une probabilité de présence.

Ces moyens de traitement peuvent être présents au moins en partie au niveau de chaque émetteur récepteur du dispositif

De préférence, le dispositif selon l'invention comprend en outre des boîtiers dits locaux, chaque boîtier local du type émetteur/récepteur RF étant agencé pour recueillir et traiter au moins en partie, des émissions émises par les émetteurs récepteurs sur une zone regroupant un certain nombre d'émetteurs récepteurs. Par conséquent, chaque boîtier local comprend également au moins une partie des moyens de traitement du dispositif selon l'invention sous forme d'un microprocesseur.

De manière avantageuse, ces boîtiers locaux sont en outre en communication les uns avec les autres au moyen d'un réseau local de communication horizontal tel qu'un réseau local de communication du type réseau de terrain connu dans le domaine de la gestion technique de bâtiment à savoir, ceux connus sous la dénomination commerciale LonWorks, BacNet et similaires. Cette communication, entre eux, leur permet d'organiser les communications RF de la zone locale, par synchronisation temporelle des éléments identifiants de la zone.

De plus, ce réseau de communication horizontal permet de mettre en communication chaque boîtier local avec une unité de traitement par zone correspondant à une surface comportant une pluralité d'unités de base de surface déterminées et donc une pluralité en corrélation d'émetteurs récepteurs et de boîtier locaux, telle qu'un étage de bâtiment, un département au sein d'un étage, par exemple. Les boîtiers locaux transmettent donc à une unité de traitement par zone les identifications ainsi que les mesures associées, destinées à la localisation.

Chaque unité de traitement par zone reçoit donc les informations d'identification et les mesures associées. Elle exécute alors les calculs de localisation et constitue une base de présence des identifiants dans la zone desservie. Une unité de traitement de zone comporte donc également au moins une partie des moyens de traitement du dispositif selon l'invention, sous forme d'au moins un microprocesseur permettant l'exécution des calculs de localisation par exemple à l'aide d'algorithmes.

Chaque unité de traitement de zone peut en outre communiquer par le biais d'un réseau général de communication permettant une communication à haut débit, de préférence au moins 100 Mb/s, tel qu'un réseau Ethernet TCP/IP, avec des serveurs tels qu'un serveur central, un serveur de gestion technique du bâtiment et tout autre type d'applicatifs techniques, ces serveurs pouvant eux-mêmes communiquer via le réseau intranet de l'utilisateur avec des applicatifs de gestion notamment.

Le serveur central consolide les informations d'identification et de localisation par corrélation avec les informations physiques connues telles que le cloisonnement, les localisations et cheminement passés, etc. et les informations issues des autres zones. Il enregistre ces informations et peut les associer aux systèmes de données des systèmes applicatifs.

Le dispositif de l'invention lorsqu'il est mis en oeuvre dans un vaste bâtiment met donc en oeuvre également une infrastructure de communication et d'automatisation bâtie selon un modèle de traitement réparti de l'information.

De préférence, les émetteurs récepteurs RF du dispositif selon l'invention sont implantés au niveau des plafonds des surfaces à surveiller. Selon une forme de réalisation de l'invention, l'implantation est choisie en fonction de la trame de bureau et on peut implanter un émetteur récepteur toutes les deux trames. Sinon, l'implantation se fait de sorte qu'il y a au moins un émetteur récepteur par espace cloisonné.

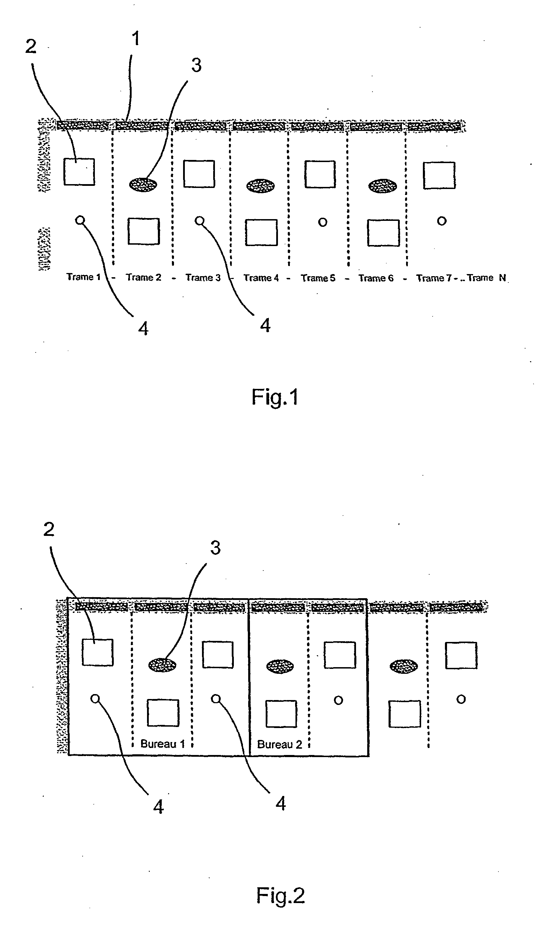

En champ libre, c'est-à-dire sans obstacle, le champ de radio fréquence (RF) rayonné sur le plafond par un élément identifiant placé à un point donné présente un niveau de réception répondant à une loi mathématique de décroissance connue (voir la figure 1), la localisation peut alors être effectuée très simplement par calcul en prenant en compte les mesures de niveaux réalisées sur les N émetteurs récepteurs des trames correspondantes. L'erreur de localisation peut être faible de l'ordre de quelques centimètres car elle dépend essentiellement des erreurs de mesures et des erreurs liées à la polarisation de l'onde RF émise.

Toutefois, sur un plateau de bureau aménagé, de nombreux obstacles plus ou moins perméables aux ondes RF peuvent être installés, tels que des armoires, des cloisons, des postes informatiques, etc. Ces obstacles induisent une perturbation très significative dans la propagation des ondes RF, notamment par atténuation, réflexions. Les moyens de traitement sont de ce fait propres à réaliser une intégration des points obtenus puis à réinterpréter la courbe idéale (voir la figure 2). L'erreur de localisation peut être d'autant plus importante que la courbe est déformée en général à cause de la présence d'obstacles métalliques et que le nombre de points, donc d'émetteurs récepteurs captant à un niveau suffisant est réduit.

Ainsi de préférence, dans certaines zones à surveiller, on peut prévoir en plus des émetteurs récepteurs en tant qu'éléments de référence, des éléments identifiants fixes en tant qu'éléments de référence sur des positions géographiques fixes, connues par le dispositif et permettant de relever la topologie de propagation des ondes dans la zone. Les déformations ainsi détectées par le dispositif peuvent alors être utilisées pour interpréter, puis corriger les mesures obtenues depuis d'autres éléments identifiants.

On peut également prévoir une implantation des émetteurs récepteurs moins dense dans d'autres surfaces à surveiller ne comportant pas autant de perturbation du rayonnement des ondes RF.

De manière avantageuse, il est possible de prévoir que les moyens de traitement du signal émis par un élément identifiant comprennent également des moyens de mesure de l'angle de réception incident du signal RF sur l'émetteur récepteur logé au plafond. A cet effet, l'émetteur récepteur est pourvu de plusieurs antennes directives orientées dans des angles de réception différents, ou de plusieurs antennes simples qui sont commutées électroniquement à basse fréquence de façon à obtenir un effet « doppler » sur le signal émis par l'élément identifiant. Dans ce second cas, la mesure est effectuée pendant une période de maintien de la porteuse RF sans modulation.

Il est à noter que l'erreur de localisation pouvant survenir est directement proportionnelle à la hauteur du plafond dans lequel sont implantés les émetteurs récepteurs du dispositif selon l'invention. Ainsi, plus la hauteur du plafond est importante, plus le rapport de cette hauteur sur la distance qui sépare l'émetteur récepteur de l'élément identifiant est faible. De manière à éviter ce phénomène et permettre une localisation dans des zones présentant une hauteur importante, on préférera réaliser l'implantation des émetteurs récepteurs dans le plancher et/ou en zone d'allège éventuellement.

L'élément identifiant présente un code identifiant unique, de préférence programmable ainsi qu'une fréquence de réveil de manière à émettre spontanément son code d'identification à cette fréquence, de préférence programmable. Cette fréquence varie de préférence de quelques secondes à plusieurs heures en fonction du besoin d'identification généralement lié à la nature de l'objet à identifier. Ainsi, une personne peut être identifiée à une fréquence d'une émission toutes les 10 secondes tandis qu'un bureau sera identifié à une fréquence d'une émission par jour.

Selon une forme de réalisation de l'invention, l'élément identifiant comprend au moins un émetteur RF, un microcontrôleur, une minuterie et, éventuellement un étage résonateur, permettant le réveil du microcontrôleur et une source d'alimentation en énergie. Pour les identifiant à fréquence d'émission importante (1s à 1000s par exemple), un récepteur RF peut être avantageusement intégré.

De préférence, l'émetteur présente une puissance d'émission de l'ordre du milliwatt, et d'une antenne permettant l'émission d'une onde la moins polarisée possible.

Le microcontrôleur permet de piloter le fonctionnement de l'ensemble et il est activé par la minuterie et/ou par un résonateur, par exemple de 125 kHz. En fonction des paramètres de l'élément identifiant et des données reçues sur son parcours (si récepteur RF intégré), le microcontrôleur peut programmer la minuterie pour permettre son prochain réveil en correspondance.

La minuterie est généralement du type, pilotée par céramique ou similaire, à très faible consommation. Elle permet le réveil du microcontrôleur après une durée préprogrammée. De manière à permettre une fonction « synchronisation temporelle des identifications », la précision de la minuterie doit être de préférence de plus de 1 dix millièmes.

L'étage résonateur de 125 kHz permet également l'activation du microcontrôleur lorsqu'il se trouve en présence d'un rayonnement électromagnétique d'une fréquence de 125 kHz. Cette fonctionnalité peut être utilisée soit par activation de proximité, le niveau de 125 kHz étant suffisant pour activer l'élément identifiant que dans un espace très faible, par exemple quelques centimètres, notamment lorsque le porteur de l'élément identifiant veut montrer sa volonté de s'identifier, par exemple lorsqu'il veut ouvrir une porte, soit par activation de zone, le niveau de 125 kHz étant alors choisi de façon à permettre l'activation dans un volume géographique important, tel que quelques mètres permettant notamment l'identification « à la volée » en cas de surveillance de passage par un accès ouvert, par exemple.

Cette fonctionnalité est réalisée à l'aide côté lecteur d'un signal sinusoïdal à 125 kHz, injecté dans un solénoïde. Le diamètre et la puissance injectée permettent le choix proximité/zone avec toutes les déclinaisons possibles. Coté élément identifiant, on prévoit un circuit passif résonnant dont le niveau de sortie permet l'alimentation d'un circuit d'intégration et de vérification du signal puis l'activation des circuits principaux.

En ce qui concerne les moyens d'alimentation en énergie de l'élément identifiant, on choisit de préférence ceux-ci en fonction de leur durée de vie et de leur rapport capacité/volume. Compte tenu des technologies actuelles, la durée de vie de ces moyens d'alimentation en énergie peut être estimée à 1 à 10 ans, en fonction de la cadence d'émission programmée de l'élément identifiant.

Le dispositif selon l'invention permet la localisation et l'identification d'une quantité importante d'éléments identifiants au sein d'une même zone géographique prédéterminée. Un élément identifiant comme on l'a décrit précédemment, entre en communication de manière spontanée à une cadence fixe. Ainsi, la durée du cycle d'émission/réception d'un élément identifiant peut être définie comme suit : émission du code d'identification et maintien de la porteuse établie sans modulation correspondant à la durée d'émission plus silence obligatoire puis réception de l'acquittement et coordonnées de synchronisation correspondant à la durée d'écoute avec acquittement et synchronisation.

Ainsi, le dispositif selon l'invention comporte en outre des moyens de synchronisation des émissions spontanées des éléments identifiants dans une zone géographique prédéterminée, lesdits moyens étant notamment constitués d'un émetteur récepteur dit maître dans ladite zone géographique prédéterminée.

Ainsi, lorsqu'un nouvel élément identifiant pénètre dans une zone géographique prédéterminée, il émet spontanément. Cette émission est reçue par N émetteurs récepteurs. Ces derniers n'émettent pas de réponse vers l'élément identifiant. Les informations d'identification et de localisation sont émises sur le réseau local des boîtiers vers l'unité de traitement de zone, celle-ci localise l'identifiant et identifie l'émetteur récepteur maître concerné. S'il s'agit d'un identifiant équipé d'un récepteur RF, l'unité de traitement par zone émet vers l'émetteur récepteur maître la position temporelle allouée à ce nouvel élément identifiant se trouvant dans sa zone d'influence. Ainsi, lors de la prochaine émission de l'élément identifiant, sa position temporelle lui sera transmise en réponse dans la trame d'acquittement. L'élément identifiant peut alors calculer sa prochaine heure d'émission spontanée en fonction de sa position temporelle.

Lorsque tous les éléments identifiants d'une zone géographique prédéterminée ont été synchronisés plus aucune collision n'est possible et donc on ne court plus le risque de perdre une identification/localisation.

On évite ainsi avantageusement de nombreuses collisions des émissions dues aux nombreux éléments identifiants se trouvant dans une même zone géographique prédéterminée.

Selon une forme de réalisation préférée de l'invention, le dispositif de localisation et/ou d'identification selon l'invention constitue également un dispositif de gestion technique de bâtiment.

Depuis plusieurs années, les systèmes de gestion technique des bâtiments (GTB) prennent en charge de plus en plus souvent les organes techniques terminaux situés dans les locaux. Ces équipements techniques terminaux peuvent être par exemple les luminaires, les ventilo-convecteurs, les poutres froides, les stores, etc. Au sein de la GTB, la prise en charge du contrôle commande et la configuration de ces équipements terminaux est appelée système de gestion de confort. Ce système de gestion du confort d'un immeuble de bureaux par exemple doit prendre en compte les besoins des utilisateurs, des exploitants, des intégrateurs et des gestionnaires de locaux. Il doit donc pouvoir, pour le confort de l'utilisateur, piloter une grande variété d'équipements avec la plus grande souplesse possible. Pour l'exploitant, il doit permettre une commande à distance et la supervision des équipements, gérer des automatismes et accepter simplement des modifications de configuration. Pour le gestionnaire et le promoteur de l'ouvrage, le coût d'installation, le respect des normes et les automatismes d'économie d'énergie sont tout aussi essentiels le confort des utilisateurs et la facilité d'exploitation sont des facteurs importants. Enfin pour l'intégrateur, la mise en oeuvre du système doit être simple, des outils matériels et logiciels devant faciliter l'installation, les essais et la configuration.

Dans tous les cas, la problématique posée au concepteur du bâtiment pour créer une modularité d'implantation géographique de ces équipements terminaux de façon à pouvoir réaliser les futurs cloisonnements de locaux sans pour autant avoir à modifier l'implantation de ces terminaux est résolue ici en utilisant le dispositif selon l'invention. En effet, le dispositif de localisation et/ou d'identification selon l'invention, en particulier par le biais des émetteurs/récepteurs RF implantés selon une unité de base d'espace et de préférence selon une densité d'implantation élevée et régulière, peut avantageusement être utilisé également en tant que dispositif de gestion de confort. Les émetteurs récepteurs RF sont alors aptes à commander les équipements terminaux qui sont agencés pour pouvoir être commandés par radio fréquence, les ordres émanant d'un serveur de gestion de confort par l'intermédiaire des unités de traitement de zone et des boîtiers locaux. Ainsi, les réseaux locaux de communication prévus dans le dispositif selon l'invention permettent en outre la communication entre les boîtiers locaux, les unités de traitement par zone et certains autres organes techniques du bâtiment tels que la climatisation, les éclairages, les stores, les contrôles d'accès.

Dans cette forme de réalisation préférée de l'invention, l'élément identifiant peut également comporter des touches de commande utilisateur qui permettent à l'utilisateur de commander également son environnement, par exemple la lumière, la climatisation, l'ouverture d'une porte.

De manière très avantageuse, le dispositif selon l'invention permet donc une identification et une localisation des biens et des personnes, les informations d'identification et de localisation pouvant ensuite être utilisées dans des systèmes applicatifs divers et variés.

Ainsi, du fait de la grande précision de localisation et de la possibilité de localiser un bien ou une personne dans un volume cloisonné (un bureau, une salle, une pièce), apportée par le dispositif selon l'invention, et ce même si ces volumes sont modifiés au cours du temps, on peut envisager d'utiliser celle-ci pour gérer des surfaces (optimisation des taux d'occupation des postes de travail et des salles de réunions), pour gérer l'énergie notamment en fonction d'une occupation réelle tenant compte du nombre de personnes et de l'historique de départ et arrivée des personnes, pour gérer la sûreté des biens et des personnes, pour gérer des plans par exemple par mise à jour automatique, pour gérer des inventaires (comptage des éléments de même nature, gestion comptable automatique et fiable, gestion des remplacements en fonction d'une durée de vie, localisation en cas de besoins des équipements informatiques, mobilier, audiovisuel, etc.) ainsi que pour gérer des transferts/services à l'occupant tels que la détermination des mouvements d'objets dans un bâtiment que l'on peut soit programmer soit contrôler, l'association à un service de demande d'intervention permettant de déterminer les temps d'intervention des prestataires et donc améliorer la qualité de service à l'occupant.

L'invention a également pour objet un procédé d'identification et de localisation de biens et/ou de personnes tel que défini dans la revendication 15 et ses revendications dépendantes.

On décrira maintenant l'invention plus en détail en référence aux dessins dans lesquels :
la figure 1 est une vue schématique d'une surface à surveiller divisée selon une unité de base de surface ;
la figure 2 représente une vue schématique d'une surface selon la figure 1 cloisonnée ;
la figure 3 une vue en schéma du principe d'un dispositif selon l'invention ;
la figure 4 représente une vue schématique d'une surface à surveiller sur laquelle un dispositif selon l'invention est implanté
la figure 5 est une représentation schématique de la courbe idéale de décroissance du niveau de réception de l'émission d'un élément identifiant par une pluralité d'émetteurs récepteurs RF ; et
la figure 6 est une représentation schématique de la courbe calculée de décroissance du niveau de réception de l'émission d'un élément identifiant par une pluralité d'émetteurs récepteurs RF.

La figure 1 représente un exemple simple de division d'une surface à surveiller, contrôler ou analyser selon une unité de base de surface. Ainsi, une zone de bureau est divisée, en fonction de sa typologie d'utilisation pour permettre l'élaboration d'un référentiel, en unités de base de surface ou trame 1 à trame N, chaque trame comportant ici un store 1, un luminaire 2 et un ventilo-convecteur 3 une trame sur deux. Lorsque les règles de tramage ont été respectées, il est possible de prévoir un cloisonnement informatique (bureau 1, bureau 2) comme on peut le voir à la figure 2, sans aucune modification du câblage car on associe une liste de luminaire 2, de ventilo-convecteur 3 et de stores 1 à un même volume bureau 1 ou bureau 2. Bien sûr, l'invention peut être mise en oeuvre simplement en se basant sur le fait que chaque espace cloisonné doit comporter au moins un émetteur-récepteur.

Les émetteurs récepteurs 4 dudit dispositif de l'invention sont implantés de sorte qu'au moins un émetteurs récepteurs 4 soit présent dans un espace cloisonné, tel qu'un bureau, soit une trame sur deux, ainsi qu'on peut le voir à la figure 2. Ces émetteurs récepteurs 4 sont alors également utiles en tant que commandes des équipements terminaux 1, 2 et 3.

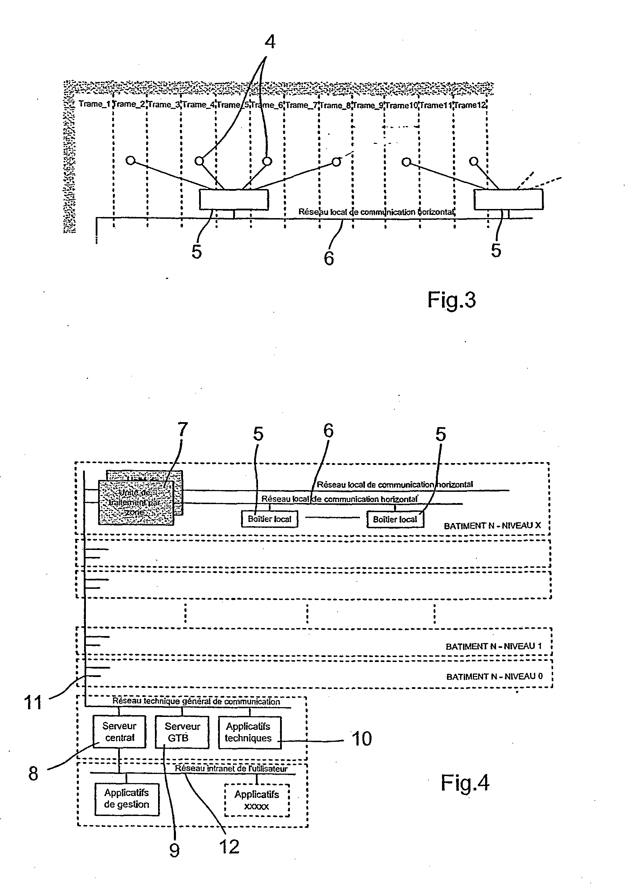

Comme cela est visible à la figure 3, les émetteurs récepteurs 4 communiquent avec un boîtier local 5, émetteur récepteur également, recueillant notamment les émissions de N récepteurs 4. Les boîtiers locaux 5 sont en communication les uns avec les autres à l'aide d'un réseau de terrain 6 tel que celui disponible sous la dénomination commerciale LonWorks et également en communication avec une unité de traitement par zone 7 comme cela est représenté à la figure 4.

Ainsi, on peut voir que chaque niveau (1 à x) d'un bâtiment N comporte une implantation d'émetteurs récepteurs 4 selon le dispositif de l'invention en communication avec des boîtiers locaux 5 eux-mêmes en communication avec une unité de traitement par zone 7, au niveau de chaque niveau de bâtiment. Un niveau de bâtiment peut bien entendu être divisé en plusieurs zones présentant chacune une unité de traitement par zone 7.

Chaque unité de traitement par zone 7 est ensuite en communication avec un serveur central 8, un serveur de gestion technique du bâtiment 9 et/ou d'autres serveurs applicatifs 10 via un réseau technique général de communication 11.

A son tour, le serveur central peut lui-même communiquer via le réseau intranet 12 de l'utilisateur avec des applicatifs de gestion notamment.

Comme on peut le voir à la figure 3, les émetteurs récepteurs RF du dispositif selon l'invention sont implantés en corrélation avec les trames, de préférence au niveau des plafonds des surfaces à surveiller.

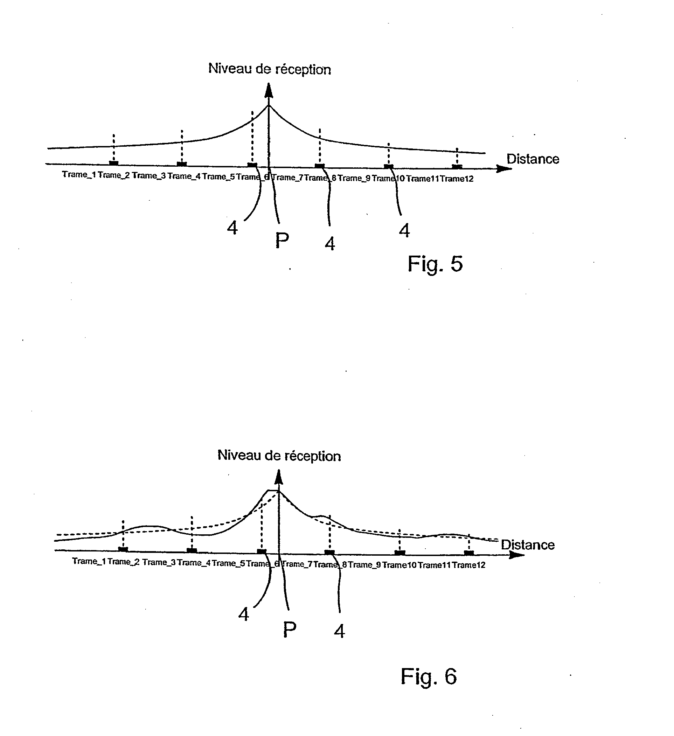

En champ libre, c'est-à-dire sans obstacle, le champ de radio fréquence (RF) rayonné sur le plafond par un élément identifiant placé à un point donné P présente un niveau de réception répondant à une loi mathématique de décroissance connue comme on le voit à la figure 5. La localisation peut alors être effectuée très simplement par calcul en prenant en compte les mesures de niveaux réalisées sur les N émetteurs récepteurs des trames correspondantes.

Toutefois, sur un plateau de bureau aménagé, la courbe de niveau de réception ne sera pas idéale comme à la figure 5. Les moyens de traitement sont de ce fait propres à réaliser une intégration des points obtenus puis à réinterpréter la courbe idéale.

L'invention n'est bien entendu pas limitée à l'exemple de réalisation décrit mais couvre toutes les variantes possibles dans le champ de protection des revendications.

## Revendications

1. Dispositif de localisation et d'identification de biens et/ou de personnes dans un local quel que en soit la taille, la nature et l'utilisation comprenant des éléments identifiants par radiofréquence destinés à équiper les biens et/ou les personnes à identifier et/ou à localiser dans le local, **caractérisé en ce qu'**il comprend en outre:
- une pluralité d'émetteurs/récepteurs radiofréquence (4) déployés sur l'ensemble des surfaces du local à surveiller qui sont constituées à partir d'unités de base d'espace liées aux typologies d'utilisation de ces surfaces et permettant l'élaboration d'un référentiel, lesdites unités de base pour l'implantation pouvant constituer des espaces cloisonnés, l'implantation des émetteurs/récepteurs (4) devant alors être d'au moins un émetteur-récepteur pour un espace représentant l'espace cloisonné le plus petit possible que l'on peut prévoir, le déploiement desdits émetteurs/récepteurs (4) étant défini en fonction de ladite unité de surface, de sorte que l'émission d'un signal par un élément identifiant porté par un bien et/ou une personne est reçue de manière simultanée par N émetteurs/récepteurs,
- une pluralité d'éléments de référence de deux types: des émetteurs/récepteurs radiofréquence (4) ayant une implantation connue dans le référentiel et permettant une localisation d'un élément identifiant par rapport audit référentiel;
- des éléments identifiants, identifiés, ayant une implantation connue dans le référentiel, qui permettent de localiser les émetteurs/récepteurs radiofréquence (4) qui les reçoivent et en plus d'obtenir la localisation relative d'un élément identifiant émettant dans la même zone que dits éléments identifiants identifiés;
- des moyens de traitement des informations (5, 6, 7) relatives à une émission radiofréquence d'au moins un élément identifiant reçue de manière simultanée par les N émetteurs/récepteurs radiofréquence, lesdits moyens de traitement permettant l'identification de l'élément identifiant et sa localisation, en fonction d'au moins l'un des éléments de référence, lesdits moyens de traitement sont compris au moins en partie dans des boîtiers locaux (5), lesdits boîtiers locaux (5) reliés entre eux par un réseau de communication de type filaire.

2. Dispositif selon la revendication 1, **caractérisé en ce que** dans un espace cloisonné non perméable aux rayonnement radiofréquence, un élément identifiant présent dans ledit espace, sera reçu de manière simultanée par les N émetteurs/récepteurs radiofréquence installés dans ledit espace cloisonné, et la localisation dudit élément identifiant sera effectué par le calcul dans ledit espace cloisonné.

3. Dispositif selon la revendication 1, **caractérisé en ce que** l'unité de base d'espace utilisée pour diviser les surfaces du bâtiment est du type trame de bureau.

4. Dispositif selon la revendication 3, **caractérisé en ce qu'**un émetteur/récepteur radiofréquence (4) est implanté toutes les deux trames.

5. Dispositif selon l'une des revendications 1 à 4, **caractérisé en ce que** les moyens de traitement sont compris au moins en partie sur les émetteurs/récepteurs (4), lesdits émetteurs/récepteurs comportant au moins les moyens d'identification de l'élément identifiant.

6. Dispositif selon l'une des revendications 1 à 5, **caractérisé en ce que** les moyens de traitement compris dans les boîtiers locaux (5) sont implantés de manière à concentrer et, éventuellement pré-traiter, les informations de N émetteurs/récepteurs (4).

7. Dispositif selon la revendication 6, **caractérisé en ce que** les moyens de traitement sont compris au moins en partie sur des unités de traitement par zones (7) agencées pour réceptionner les informations d'identification et de mesures associés depuis les émetteurs récepteurs (4), via les boîtiers locaux (5), chaque unité de traitement exécutant les calculs de localisation et constituant une base de présence des identifiants dans la zone desservie.

8. Dispositif selon la revendication 7, **caractérisé en ce que** chaque unité de traitement de zone (7) communique par le biais d'un réseau général de communication de type filaire.

9. Dispositif selon la revendication 8, **caractérisé en ce que** chaque serveur peut communiquer via le réseau intranet (12) de l'utilisateur avec des applicatifs de gestion.

10. Dispositif selon l'une des revendications 1 à 9, **caractérisé en ce que** les moyens de traitement sont agencés pour localiser au moins un élément identifiant par mesure du niveau du signal émis par ledit élément identifiant.

11. Dispositif selon la revendication 10, **caractérisé en ce que** les moyens de traitement sont agencés pour localiser au moins un élément identifiant par mesure de l'angle de réception incident du signal RF sur un émetteur-récepteur logé au plafond, au planché ou en allège.

12. Dispositif selon l'une des revendications 1 à 11, **caractérisé en ce que** l'élément identifiant présente un code identifiant unique, de préférence programmable ainsi qu'une fréquence de réveil de manière à émettre spontanément son code d'identification à cette fréquence, de préférence programmable.

13. Dispositif selon la revendication 12, **caractérisé en ce que** l'élément identifiant comprend au moins un émetteur et éventuellement un récepteur RF, un microcontrôleur, une minuterie et, éventuellement un étage résonateur, permettant le réveil du microcontrôleur et une source d'alimentation en énergie.

14. Dispositif selon l'une des revendications 1 à 13, **caractérisé en ce qu'**il comporte en outre des moyens de synchronisation des émissions spontanées des éléments identifiants dans une zone géographique prédéterminée, lesdits moyens étant notamment constitués d'un émetteur-récepteur (4) dit maître dans ladite zone géographique prédéterminée.

15. Procédé d'identification et de localisation de biens et/ou de personnes dans un local quelconque, local quel que en soit la taille, la nature et l'utilisation comprenant des éléments identifiants par radiofréquence destinés à équiper les biens et/ou les personnes à identifier et/ou localiser dans le local, **caractérisé en ce qu'**il comprend les étapes suivantes :
- on déploie une pluralité d'émetteurs/récepteurs radiofréquence (4) sur l'ensemble des surfaces du local à surveiller qui sont constituées à partir d'unités de base d'espace liées aux typologies d'utilisation de ces surfaces et permettant l'élaboration d'un référentiel, lesdites unités de base pour l'implantation pouvant constituer des espaces cloisonnés, l'implantation des émetteurs/récepteurs (4) devant alors être d'au moins un émetteur-récepteur pour un espace représentant l'espace cloisonné le plus petit possible que l'on peut prévoir, le déploiement desdits émetteurs/récepteurs (4) étant défini en fonction de ladite unité de surface, de sorte que l'émission d'un signal par un élément identifiant porté par un bien et/ou une personne est reçue de manière simultanée par N émetteurs/récepteurs,
- on prévoit une pluralité d'éléments de référence de deux types:
des émetteurs/récepteurs radiofréquence (4) ayant une implantation connue dans le référentiel et permettant une localisation d'un élément identifiant par rapport audit référentiel;
des éléments identifiants, identifiés, ayant une implantation connue dans le référentiel, qui permettent de localiser les émetteurs/récepteurs radiofréquence (4) qui les reçoivent et en plus d'obtenir la localisation relative d'un élément identifiant émettant dans la même zone que dits éléments identifiants identifiés;
- on prévoit des moyens de traitement des informations (5, 6, 7) relatives à une émission radiofréquence d'au moins un élément identifiant reçue de manière simultanée par les N émetteurs/récepteurs radiofréquence, lesdits moyens de traitement permettant l'identification de l'élément identifiant et sa localisation, en fonction d'au moins l'un des éléments de référence, lesdits moyens de traitement sont compris au moins en partie dans des boîtiers locaux (5), lesdits boîtiers locaux (5) étant reliés entre eux par un réseau de communication de type filaire.

16. Procédé selon la revendication 15, **caractérisé en ce qu'**en outre, on identifie et on calcule l'angle de réception incident du signal RF émis par un élément identifiant sur un émetteur-récepteur logé au plafond.

## Patentansprüche

1. Vorrichtung zum Lokalisieren und Identifizieren von Gegenständen und/oder Personen in einer Räumlichkeit beliebiger Größe, Beschaffenheit und Verwendung, umfassend Radiofrequenz-Identifizierungselemente, die dazu gedacht sind, die in der Räumlichkeit zu identifizierenden und/oder zu lokalisierenden Gegenstände und/oder Personen auszustatten, **dadurch gekennzeichnet, dass** sie ferner Folgendes umfasst:
- eine Vielzahl von Radiofrequenz-Sendern/- Empfängern (4), die auf allen Oberflächen der zu überwachenden Räumlichkeit aufgestellt sind und die aus Raumbasiseinheiten gebildet werden, die mit den Verwendungstypologien dieser Oberflächen zusammenhängen und die Ausarbeitung eines Referenzwerks ermöglichen, wobei die Basiseinheiten für den Einbau abgetrennte Räume bilden können, wobei der Einbau der Sender/Empfänger (4) dann aus mindestens einem Sender/Empfänger für einen Raum bestehen muss, der den kleinstmöglichen abgetrennten Raum darstellt, den man bereitstellen kann, wobei die Aufstellung der Sender/Empfänger (4) in Abhängigkeit von der Flächeneinheit definiert wird, so dass das Senden eines Signals durch ein Identifizierungselement, das von einem Gegenstand und/oder einer Person getragen wird, gleichzeitig von N Sendern/Empfängern empfangen wird,
- eine Vielzahl von Referenzelementen von zwei Arten: Radiofrequenz-Sender/Empfänger (4), deren Einbau in dem Referenzwerk bekannt ist und die eine Lokalisierung eines Identifizierungselements im Verhältnis zu dem Referenzwerk ermöglichen;
- identifizierte Identifizierungselemente, deren Einbau in dem Referenzwerk bekannt ist und die es ermöglichen, die Radiofrequenz-Sender/Empfänger (4) zu lokalisieren, die diese empfangen, und es zusätzlich ermöglichen, die relative Lokalisierung eines Identifizierungselements zu erzielen, das in derselben Zone sendet wie die identifizierten Identifizierungselemente;
- Mittel zur Verarbeitung der Informationen (5, 6, 7) bezüglich einer Radiofrequenzsendung mindestens eines Identifizierungselements, die gleichzeitig von den N Radiofrequenz-Sendern/Empfängern empfangen wird, wobei die Verarbeitungsmittel die Identifizierung des Identifizierungselements und seine Lokalisierung in Abhängigkeit von mindestens einem der Referenzelemente ermöglichen, wobei die Verarbeitungsmittel mindestens teilweise in lokalen Gehäusen (5) enthalten sind, wobei die lokalen Gehäuse (5) durch ein drahtgebundenes Kommunikationsnetzwerk miteinander verbunden sind.

2. Vorrichtung nach Anspruch 1, **dadurch gekennzeichnet, dass** in einem abgetrennten Raum, der für Radiofrequenzstrahlung nicht durchlässig ist, ein Identifizierungselement, das in diesem Raum vorliegt, gleichzeitig von den N Radiofrequenz-Sendern/Empfängern empfangen wird, die in dem abgetrennten Raum installiert sind, und die Lokalisierung des Identifizierungselements durch die Berechnung in dem abgetrennten Raum erfolgt.

3. Vorrichtung nach Anspruch 1, **dadurch gekennzeichnet, dass** die Raumbasiseinheit, die verwendet wird, um die Oberflächen des Gebäudes zu unterteilen, nach Art eines Bürorasters ist.

4. Vorrichtung nach Anspruch 3, **dadurch gekennzeichnet, dass** ein Radiofrequenz-Sender/Empfänger (4) in jedem zweiten Raster eingebaut ist.

5. Vorrichtung nach einem der Ansprüche 1 bis 4, **dadurch gekennzeichnet, dass** die Verarbeitungsmittel mindestens teilweise auf den Sendern/Empfängern (4) enthalten sind, wobei die Sender/Empfänger mindestens die Identifizierungsmittel des Identifizierungselements umfassen.

6. Vorrichtung nach einem der Ansprüche 1 bis 5, **dadurch gekennzeichnet, dass** die Verarbeitungsmittel, die in den lokalen Gehäusen (5) enthalten sind, derart eingebaut sind, dass sie die Informationen von N Sendern/Empfängern (4) konzentrieren und gegebenenfalls vorbehandeln.

7. Vorrichtung nach Anspruch 6, **dadurch gekennzeichnet, dass** die Verarbeitungsmittel mindestens teilweise auf Verarbeitungseinheiten nach Zonen (7) enthalten sind, die angeordnet sind, um die dazugehörigen Identifizierungs- und Messinformationen von den Sendern/Empfängern (4) über die lokalen Gehäuse (5) in Empfang zu nehmen, wobei jede Verarbeitungseinheit die Lokalisierungsberechnungen ausführt und eine Grundlage für das Vorhandensein der Identifizierer in der bedienten Zone bildet.

8. Vorrichtung nach Anspruch 7, **dadurch gekennzeichnet, dass** jede Zonenverarbeitungseinheit (7) über ein drahtgebundenes Hauptkommunikationsnetz kommuniziert.

9. Vorrichtung nach Anspruch 8, **dadurch gekennzeichnet, dass** jeder Server über das Intranet-Netzwerk (12) des Benutzers mit Verwaltungsanwendungen kommunizieren kann.

10. Vorrichtung nach einem der Ansprüche 1 bis 9, **dadurch gekennzeichnet, dass** die Verarbeitungsmittel angeordnet sind, um mindestens ein Identifizierungselement durch Messung des Pegels des Signals zu lokalisieren, das von dem Identifizierungselement gesendet wird.

11. Vorrichtung nach Anspruch 10, **dadurch gekennzeichnet, dass** die Verarbeitungsmittel angeordnet sind, um mindestens ein Identifizierungselement durch die Messung des einfallenden Empfangswinkels des RF-Signals an einem an der Decke, auf dem Boden oder in einer Brüstung aufgenommenen Sender/Empfänger zu lokalisieren.

12. Vorrichtung nach einem der Ansprüche 1 bis 11, **dadurch gekennzeichnet, dass** das Identifizierungselement einen einzigartigen, bevorzugt programmierbaren Identifizierungscode sowie eine Weckfrequenz aufweist, um auf dieser bevorzugt programmierbaren Frequenz spontan seinen Identifizierungscode zu senden.

13. Vorrichtung nach Anspruch 12, **dadurch gekennzeichnet, dass** das Identifizierungselement mindestens einen Sender und gegebenenfalls einen RF-Empfänger, einen Mikrocontroller, einen Zeitschalter und gegebenenfalls eine Resonatorstufe, die das Aufwecken des Mikrocontrollers ermöglicht, und eine Energieversorgungsquelle umfasst.

14. Vorrichtung nach einem der Ansprüche 1 bis 13, **dadurch gekennzeichnet, dass** sie ferner Mittel zum Synchronisieren der spontanen Sendungen der Identifizierungselemente in einer vorherbestimmten geographischen Zone umfasst, wobei die Mittel insbesondere aus einem so genannten Master-Sender/Empfänger (4) in der vorherbestimmten geographischen Zone bestehen.

15. Verfahren zum Identifizieren und Lokalisieren von Gegenständen und/oder Personen in einer Räumlichkeit beliebiger Größe, Beschaffenheit und Verwendung, umfassend Radiofrequenz-Identifizierungselemente, die dazu gedacht sind, die in der Räumlichkeit zu identifizierenden und/oder zu lokalisierenden Gegenstände und/oder Personen auszustatten, **dadurch gekennzeichnet, dass** es die folgenden Schritte umfasst:
- Aufstellen einer Vielzahl von Radiofrequenz-Sendern/-Empfängern (4) auf allen Oberflächen der zu überwachenden Räumlichkeit, die aus Raumbasiseinheiten gebildet werden, die mit den Verwendungstypologien dieser Oberflächen zusammenhängen und die Ausarbeitung eines Referenzwerks ermöglichen, wobei die Basiseinheiten für den Einbau abgetrennte Räume bilden können, wobei der Einbau der Sender/Empfänger (4) dann aus mindestens einem Sender/Empfänger für einen Raum bestehen muss, der den kleinstmöglichen abgetrennten Raum darstellt, den man bereitstellen kann, wobei die Aufstellung der Sender/Empfänger (4) in Abhängigkeit von der Flächeneinheit definiert wird, so dass das Senden eines Signals durch ein Identifizierungselement, das von einem Gegenstand und/oder einer Person getragen wird, gleichzeitig von N Sendern/Empfängern empfangen wird,
- Bereitstellen einer Vielzahl von Referenzelementen von zwei Arten: Radiofrequenz-Sender/Empfänger (4), deren Einbau in dem Referenzwerk bekannt ist und die eine Lokalisierung eines Identifizierungselements im Verhältnis zu dem Referenzwerk ermöglichen;
- identifizierte Identifizierungselemente, deren Einbau in dem Referenzwerk bekannt ist und die es ermöglichen, die Radiofrequenz-Sender/Empfänger (4) zu lokalisieren, die diese empfangen, und es zusätzlich ermöglichen, die relative Lokalisierung eines Identifizierungselements zu erzielen, das in derselben Zone sendet wie die identifizierten Identifizierungselemente;
- Bereitstellen von Mitteln zur Verarbeitung der Informationen (5, 6, 7) bezüglich einer Radiofrequenzsendung mindestens eines Identifizierungselements, die gleichzeitig von den N Radiofrequenz-Sendern/Empfängern empfangen wird, wobei die Verarbeitungsmittel die Identifizierung des Identifizierungselements und seine Lokalisierung in Abhängigkeit von mindestens einem der Referenzelemente ermöglichen, wobei die Verarbeitungsmittel mindestens teilweise in lokalen Gehäusen (5) enthalten sind, wobei die lokalen Gehäuse (5) durch ein drahtgebundenes Kommunikationsnetzwerk miteinander verbunden sind.

16. Verfahren nach Anspruch 15, **dadurch gekennzeichnet, dass** ferner der einfallende Empfangswinkel des RF-Signals, das von einem Identifizierungselement an einem in der Decke aufgenommenen Sender/Empfänger gesendet wird, identifiziert und berechnet wird.

## Claims

1. Device for locating and identifying goods and/or persons in a premises regardless of the size, nature and use comprising radiofrequency identifying elements to be fitted on the goods and/or persons to be identified and/or located in the premises, **characterised in that** it further comprises:
- a plurality of radiofrequency transceivers (4) deployed on all the surfaces of the premises to be monitored consisting of spatial base units associated with the types of use of the surfaces and suitable for preparing a reference system, said base units for the layout optionally consisting of partitioned spaces, the layout of the transceivers (4) in this case consisting of at least one transceiver for a space representing the smallest possible partitioned space that can be envisaged, the deployment of said transceivers (4) being defined as a function of said surface area unit, such that the transmission of a signal by an identifying element borne by a good and/or a person is received simultaneously by N transceivers,
- a plurality of reference elements of two types: radiofrequency transceivers (4) having a known layout in the reference system and suitable for locating an identifying element in relation to said reference system;
- identified identifying elements, having a known layout in the reference system, suitable for locating the radiofrequency transceivers (4) receiving same and further obtaining the relative location of an identifying element transmitting in the same zone as said identified identifying elements;
- means for processing information (5, 6, 7) relating to a radiofrequency transmission of at least one identifying element received simultaneously by the N radiofrequency transceivers, said processing means being suitable for identifying the identifying element and the location thereof, according to at least one of the reference elements, said processing means are comprised at least partly in local housings (5), said local housings (5) being interconnected by a wired communication network.

2. Device according to claim 1, **characterised in that**, in a partitioned space not permeable to radiofrequency radiation, an identifying element contained in said space will be received simultaneously by the N radiofrequency transceivers installed in said partitioned space, and the location of said identifying element will be performed by calculating in said partitioned space.

3. Device according to claim 1, **characterised in that** the spatial base unit used to divide the surfaces of the building is of the office grid type.

4. Device according to claim 3, **characterised in that** one radiofrequency transceiver (4) is installed every two frames.

5. Device according to any of claims 1 to 4, **characterised in that** the processing means are comprised at least partly on the transceivers (4), said transceivers comprising at least the means for identifying the identifying element.

6. Device according to any of claims 1 to 5, **characterised in that** the processing means comprised in the local housings (5) are laid out so as to concentrate and, optionally pre-process, the information from N transceivers (4).

7. Device according to claim 6, **characterised in that** the processing means are comprised at least partly on zone processing units (7) arranged for receiving the associated identification and measurement information from the transceivers (4), via the local housings (5), each processing unit performing the location calculations and compiling a base in respect of the presence of identifiers in the zone covered.

8. Device according to claim 7, **characterised in that** each zone processing unit (7) communicates via a wired general communication network.

9. Device according to claim 8, **characterised in that** each server can communicate via the Intranet network (12) of the user with management applications.

10. Device according to any of claims 1 to 9, **characterised in that** the processing means are arranged for locating at least one identifying element by measuring the signal level transmitted by said identifying element.

11. Device according to claim 10, **characterised in that** the processing means are arranged for locating at least one identifying element by measuring the incident angle of reception of the RF signal on a transceiver housed in the ceiling, floor or shouldering wall.

12. Device according to any of claims 1 to 11, **characterised in that** the identifying element has a unique identifying code, which is preferably programmable, and an activation frequency so as to spontaneously transmit the identification code thereof at this frequency, which is preferably programmable.

13. Device according to claim 12, **characterised in that** the identifying element comprises at least one transmitter and optionally an RF receiver, a microcontroller, a timer and, optionally a resonating stage, suitable for activating the microcontroller and a power supply source.

14. Device according to any of claims 1 to 13, **characterised in that** it further comprises means for synchronising the spontaneous transmissions of the identifying elements in a predetermined geographic zone, said means particularly consisting of a master transceiver (4) in said predetermined geographic zone.

15. Method for identifying and locating goods and/or persons in any premises, regardless of the size, nature and use comprising radiofrequency identifying elements to be fitted on the goods and/or persons to be identified and/or located in the premises, **characterised in that** it further comprises the following steps:
- a plurality of radiofrequency transceivers (4) are deployed on all the surfaces of the premises to be monitored consisting of spatial base units associated with the types of use of the surfaces and suitable for preparing a reference system, said base units for the layout optionally consisting of partitioned spaces, the layout of the transceivers (4) in this case consisting of at least one transceiver for a space representing the smallest possible partitioned space that can be envisaged, the deployment of said transceivers (4) being defined as a function of said surface area unit, such that the transmission of a signal by an identifying element borne by a good and/or a person is received simultaneously by N transceivers,
- a plurality of reference elements of two types are provided: radiofrequency transceivers (4) having a known layout in the reference system and suitable for locating an identifying element in relation to said reference system;
identified identifying elements, having a known layout in the reference system, suitable for locating the radiofrequency transceivers (4) receiving same and further obtaining the relative location of an identifying element transmitting in the same zone as said identified identifying elements
- means for processing information (5, 6, 7) relating to a radiofrequency transmission of at least one identifying element received simultaneously by the N radiofrequency transceivers are provided, said processing means being suitable for identifying the identifying element and the location thereof, according to at least one of the reference elements, said processing means are comprised at least partly in local housings (5), said local housings (5) being interconnected by a wired communication network.

16. Method according to claim 15, **characterised in that** the incident angle of reception of the RF signal transmitted by an identifying element on a transceiver housed in the ceiling is further identified and calculated.
